# FASCICULE DE BREVET EUROPEEN

(11) **EP 3 400 793 B1**
(45) Date de publication et mention de la délivrance du brevet: **18.01.2023**
(21) Numéro de dépôt: 18305573.0
(22) Date de dépôt: 09.05.2018
(51) Int. Cl.: A01K 1/01, A01K 1/015

(54) **SYSTÈME POUR LA COLLECTE DES DÉJECTIONS S'ÉCOULANT SUR LE SOL D'UNE ENCEINTE POUR L'ÉLEVAGE D'ANIMAUX, PAR EXEMPLE DE BOVINS**
SYSTEM ZUM SAMMELN VON AUSSCHEIDUNGEN, DIE AUF DEM BODEN EINER EINFASSUNG ZUR AUFZUCHT VON TIEREN, BEISPIELSWEISE RINDERN, ABLAUFEN
SYSTEM FOR COLLECTING FAECES FLOWING OVER THE FLOOR OF AN ENCLOSURE FOR RAISING ANIMALS, FOR EXAMPLE CATTLE

(30) Priorité: 12.05.2017 FR 1754205
(43) Date de publication de la demande: 14.11.2018
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle

(56) Documents cités:
- EP-A1- 2 941 954
- WO-A1-2016/128684
- DE-A1- 19 601 478

## Description

### DOMAINE TECHNIQUE AUQUEL SE RAPPORTE L'INVENTION

La présente invention concerne un système pour la collecte des déjections (notamment des liquides) s'écoulant sur le sol d'une enceinte pour l'élevage d'animaux, par exemple de bovins (bovins laitiers et/ou bovins à viande), en particulier pour l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Parmi les infections à l'origine de boiteries, la dermatite digitée, encore appelée « maladie de Mortellaro », est la plus problématique.

Des solutions techniques permettent une réduction de l'humidité des surfaces d'appui sur le sol des enceintes d'élevage avec une évacuation des liquides (en particulier des urines).

De telles solutions techniques sont par exemple décrites dans les documents WO-2016/128684, DE-196 01 478 ou EP-2 941 954.

Mais, en particulier, les solutions selon DE-196 01 478 ou EP-2 941 954 sont complexes et nécessitent des travaux de gros œuvre importants.

Il existe par conséquent un besoin de solutions techniques permettant une réduction de l'humidité des surfaces d'appui sur le sol des enceintes d'élevage avec une évacuation efficace des liquides (en particulier des urines), avantageusement cela sans nécessiter des travaux de gros œuvre importants, de sorte à améliorer les conditions d'adhérence et les conditions sanitaires des animaux.

Il existe également un intérêt pour des solutions simples qui permettent éventuellement une certaine séparation des urines et des fèces, de manière à limiter la production d'ammoniac dans les enceintes d'élevage.

### OBJET DE L'INVENTION

Dans ce contexte, la demanderesse a développé un nouveau système pour la collecte des déjections s'écoulant sur le sol d'une enceinte pour l'élevage d'animaux, visant à améliorer les conditions d'hygiène dans une enceinte d'élevage, notamment par une gestion optimale des liquides.

Le système selon l'invention comprend, conformément à la revendication 1 :
(i) un revêtement de sol comprenant un tapis rapporté sur une structure support,
   lequel tapis comporte :
   - une face supérieure, adaptée à l'appui des animaux,
   - une face inférieure, reposant sur ladite structure support,
   - des rainures, adaptées à collecter les déjections, ménagées au niveau de ladite face supérieure et munies chacune d'une ouverture longitudinale débouchant au niveau de ladite face supérieure,
   - des orifices traversants, adaptés à l'écoulement des déjections en direction de ladite structure support, qui présentent chacun une extrémité supérieure débouchant dans l'une desdites rainures et une extrémité inférieure débouchant au travers de la face inférieure dudit tapis,
   laquelle structure support comporte :
   - une face supérieure, adaptée à recevoir ledit tapis, et
   - des rainures, adaptées à recevoir les déjections, ménagées au niveau de la face supérieure de ladite structure support et munies chacune d'une ouverture longitudinale qui débouche au niveau de la face supérieure de ladite structure support,
   laquelle extrémité inférieure des orifices traversants du tapis débouche en regard de l'ouverture longitudinale d'une rainure de ladite structure support,
(ii) des moyens pour collecter les déjections circulant au sein desdites rainures, et
(iii) des moyens pour convoyer les déjections au sein desdites rainures du tapis et desdites rainures de la structure support, de manière à générer ladite circulation desdites déjections en direction desdits moyens de collecte.

Les moyens de convoyage comprennent des organes d'entraînement qui sont rapportés dans les rainures et des moyens de manœuvre qui sont accouplés avec les organes d'entraînement pour leur appliquer un mouvement destiné à provoquer le déplacement des déjections dans un sens adapté au sein de ces rainures.

Les organes d'entraînement comportent deux brins actifs superposés dans les rainures superposées :
- un brin supérieur cheminant dans la rainure du tapis pour former une partie supérieure apte à servir de support aux déjections solides tout en autorisant l'écoulement des déjections liquides, et
- un brin inférieur, cheminant dans la rainure de la structure support, pour former une partie inférieure apte à convoyer les déjections liquides s'écoulant depuis ledit brin supérieur.

Le brin supérieur et le brin inférieur sont ainsi destinés à cheminer dans deux rainures superposées, dans des sens inverses l'un par rapport à l'autre.

Un tel système permet une évacuation automatique et continue des déjections (notamment des urines) depuis la face supérieure d'appui, jusqu'auxdites rainures.

La face supérieure du tapis reste ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

En effet, les urines vont tendre à être évacuées vers les rainures de la structure support, pour leur entrainement par les moyens de convoyage associés ; les fèces vont quant à elles tendre à rester sur la face supérieure du tapis, pour leur évacuation par les moyens de convoyage cheminant dans les rainures correspondantes, par raclage mécanique (par exemple avec un rabot) ou encore par raclage aqueux (par exemple hydrocurage).

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

La face supérieure du tapis, moins humide, permet aussi à l'onglon des bovins d'être plus dur, ce qui participe à la bonne santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Un tel système de collecte est en plus particulièrement intéressant dans le cas d'un sol recouvert de paille.

En effet, le tapis maintient les matières solides (notamment la paille et les fèces) ; ainsi, ces matières solides sont susceptibles d'être raclées pour le nettoyage de ce tapis. Les moyens de convoyage sont ainsi protégés efficacement au sein des rainures, sans risque (ou tout au moins en réduisant les risques) d'interagir avec les matières solides de sorte à assurer un phénomène de circulation optimal pour les déjections dans les rainures respectives.

Le tapis présente encore deux avantages potentiels :
- une protection des moyens de convoyage manœuvrés dans les rainures, et
- un masquage visuel des moyens de convoyage manœuvrés dans les rainures, de sorte à éviter une perturbation des animaux.

D'autres caractéristiques non limitatives et avantageuses du système conforme à l'invention sont les suivantes :
- l'une au moins des rainures du tapis est sus-jacente de l'une des rainures de la structure support ; et les orifices traversants raccordés à ladite rainure du tapis comporte un axe longitudinal orienté verticalement ;
- la structure support comporte deux faces opposées : ladite face supérieure, au niveau de laquelle sont ménagées les rainures de ladite structure support, et une face inférieure reposant sur une surface de réception, par exemple une chape réalisée en bitume ou en béton ;
   - le tapis est réalisé dans un matériau choisi parmi les matériaux élastomères ou les matériaux plastiques élastomères, et la structure support est réalisée dans un matériau choisi parmi les plastiques ;
   - les orifices traversants du tapis ont une forme allongée, avec une largeur et une longueur comprises entre 5 mm et 120 mm ;
   - les rainures sont rectilignes et s'étendent parallèlement les unes par rapport aux autres ;
   - les rainures ont chacune une largeur comprise entre 15 et 50 mm et une hauteur comprise entre 15 et 50 mm ; les rainures sont espacées d'une largeur comprise entre 50 et 500 mm ;
   - les organes d'entrainement comportent chacun au moins une surface de convoyage qui est apte à convoyer les déjections présentes au sein de la rainure associé, et ladite au moins une surface de convoyage génère ladite circulation de déjections au sein de sa rainure;
   - le système comporte des moyens pour alimenter les rainures avec un liquide de traitement ;
   - chaque rainure est délimitée par deux faces latérales qui sont raccordées par une face de fond et qui délimitent une ouverture longitudinale s'ouvrant vers le haut, au niveau de la face supérieure correspondante.

L'invention propose également une enceinte d'élevage équipée d'un système de collecte selon l'invention.

Cette enceinte comporte avantageusement un couloir de circulation comportant un axe longitudinal et recouvert par un revêtement de sol ; les rainures dudit revêtement de sol sont agencées parallèlement, ou au moins approximativement parallèlement, par rapport audit axe longitudinal.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement et partiellement, en perspective et selon un plan de coupe longitudinal, une partie du système de collecte dans laquelle les rainures du revêtement de sol sont équipées avec les moyens de convoyage dédiés ;
- la figure 2 représente schématiquement et partiellement, en perspective et selon un plan de coupe transversal, le revêtement de sol selon la figure 1 (sans les moyens de convoyage) ;
- la figure 3 représente schématiquement et partiellement, vue de dessus, le système de collecte selon les figures 1 et 2 et dans laquelle les moyens de convoyage sont illustrés en traits discontinus ;
- la figure 4 représente schématiquement et partiellement, en perspective et selon un plan de coupe transversal, le tapis constitutif du revêtement de sol selon les figures 1 à 3 ;
- la figure 5 représente, partielle et de manière agrandie, le tapis selon la figure 4 ;
- la figure 6 représente schématiquement et partiellement, en perspective et selon un plan de coupe transversal, la structure support constitutive du revêtement de sol selon les figures 1 à 3 ;
- la figure 7 représente schématiquement et partiellement, en perspective, une bande convoyeuse adaptée à former les moyens de convoyage équipant le système de collecte selon les figures 1 à 3.

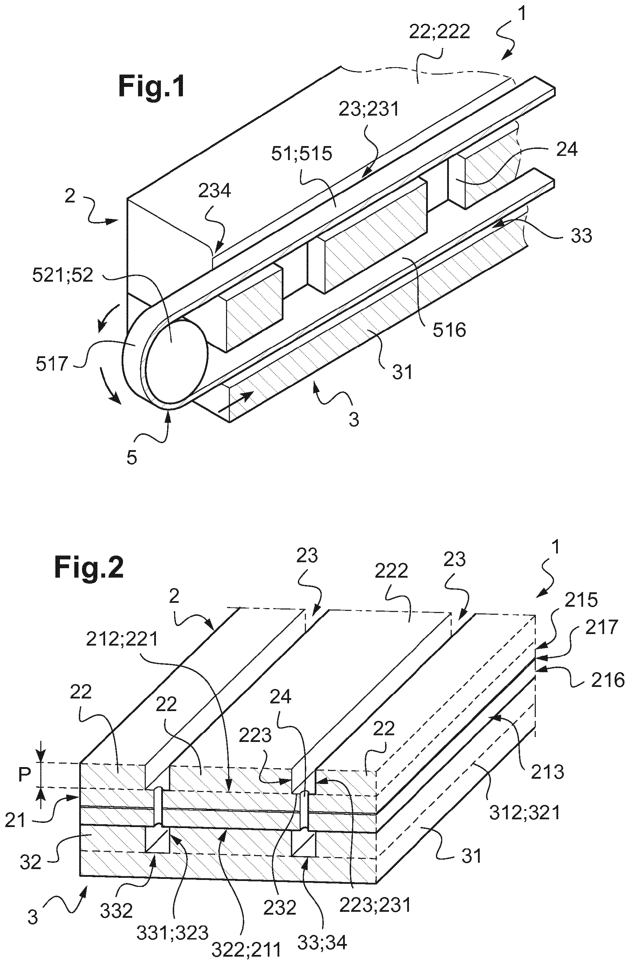

Le système de collecte selon l'invention, représenté sur les figures 1 à 7, est tout particulièrement adapté à équiper une enceinte pour l'élevage d'animaux.

Tel que développé ci-après, de tels systèmes de collecte ont pour intérêt de collecter les déjections s'écoulant sur le sol et de les évacuer, de sorte à offrir une face d'appui relativement sèche (ou au moins ne présentant pas une humidité excessive) pour les pieds des animaux, et donc plus saine et plus sécurisante.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

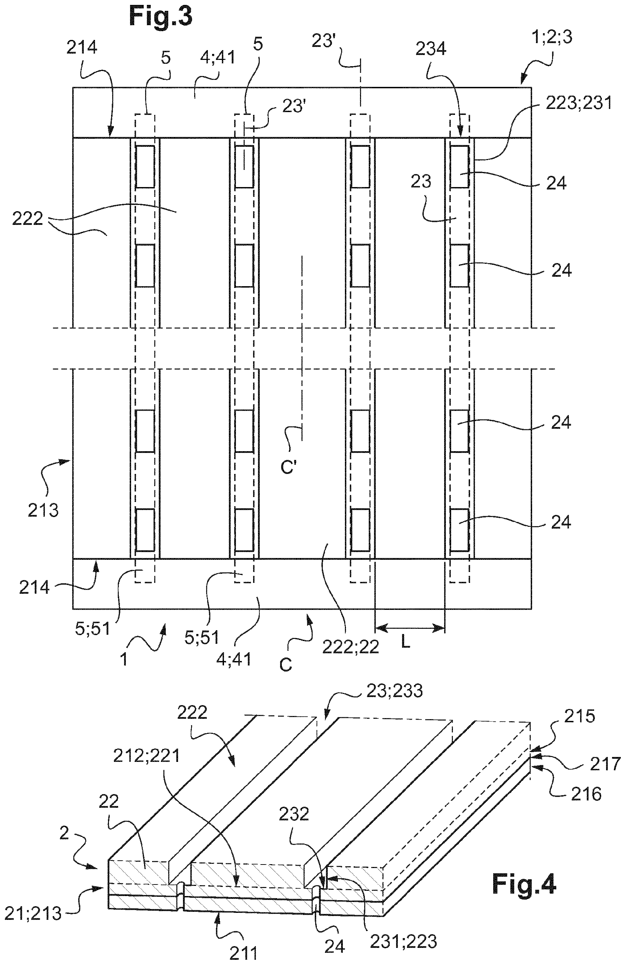

Pour cela, de manière générale, le système selon l'invention comprend :
(i) un revêtement de sol 1 comprenant un tapis 2 rapporté sur une structure support 3 (figures 1 à 3), qui sont tous deux munis de rainures adaptées à collecter les déjections,
(ii) des moyens 4 pour collecter les déjections circulant au sein de ces rainures (figure 3), et
(iii) des moyens 5 pour convoyer les déjections au sein de ces rainures, de manière à générer la circulation des déjections en direction de ces moyens de collecte 4 (figures 1 et 3 notamment).

### Revêtement de sol

Le revêtement de sol 1 recouvre une partie au moins du sol de l'enceinte d'élevage.

Le sol de cette enceinte d'élevage consiste avantageusement en une chape (ou une dalle) en béton, éventuellement armée avec un treillis métallique, ou en bitume.

En particulier, le revêtement de sol 1 est avantageusement implanté au niveau des couloirs de circulation C (figure 3) qui sont empruntés par les animaux cheminant entre les différents espaces fonctionnels de l'enceinte d'élevage (par exemple logettes, salles de traite, etc.).

Ce revêtement de sol 1 est apte à récupérer les liquides s'écoulant sur le sol et à les séparer par rapport aux matières solides (par exemple les fèces, la paille, etc.) en continu et par gravité.

Tel qu'illustré notamment sur les figures 1 à 3, le revêtement de sol 1 correspondant comprend un tapis 2 qui est rapporté sur une structure support 3.

### Tapis

Le tapis 2 consiste avantageusement en une bande allongée comportant une embase 21 dont :
- une face inférieure 211 est destinée à reposer sur la structure support 3,
- une face supérieure 212 est munie de structures saillantes 22 ménagées à distance les unes des autres, et
- le contour périphérique est délimité par deux bordures latérales 213 et par deux bordures d'extrémité 214 (ces bordures d'extrémité 214 sont visibles sur la figure 3).

La face inférieure 211 de l'embase 21 forme la face inférieure du tapis 2, (dans un souci de simplification, la face inférieure du tapis 2 est également désignée par le repère 211).

Les structures saillantes 22 ont chacune une forme allongée, du type longeron ou chevron, régulièrement réparties sur la largeur de l'embase 21 et s'étendant parallèlement à ses bordures latérales 213 (figures 1 et 2).

Ces structures saillantes 22 comportent chacune :
- une face inférieure 221 qui est solidarisée avec la face supérieure 212 de l'embase 21,
- une face supérieure libre 222 formant une partie de la face supérieure du tapis 2, et
- deux faces latérales 223 formant les faces latérales d'une rainure 23.

Les faces supérieures 222 des structures saillantes 22 forment ensemble la face supérieure du tapis 2, adaptée à l'appui des animaux (dans un souci de simplification, la face supérieure du tapis 2 est également désignée par le repère 222).

Chaque structure saillante 22 a avantageusement une hauteur P comprise entre 15 et 50 mm (figure 2) et une largeur L comprise entre 50 et 500 mm (figure 3).

Deux structures saillantes 22 juxtaposées délimitent, entre elles, l'une des rainures 23 du tapis 2.

Ces rainures 23 constituent des structures de genre rigoles ou gouttières, ménagées et débouchant au niveau de la face supérieure 222 du tapis 2.

Ces rainures 23 sont aptes à collecter (par gravité) les déjections s'écoulant sur le revêtement de sol 1, de sorte que ces déjections (en particulier les liquides) stagnent le moins possible sur la face supérieure 222 du tapis 2.

Par « liquides », on entend en particulier les déjections liquides produites par les animaux de l'élevage, en particulier leur urine.

Pour cela, comme décrit ci-dessous notamment en relation avec les figures 2, 4 et 5, chaque rainure 23 est délimitée par deux faces latérales 231 qui sont raccordées par une face de fond 232 et qui délimitent une ouverture longitudinale 233 s'ouvrant vers le haut, au niveau de la face supérieure 222 du tapis 2.

Les faces latérales 231 des rainures 23 sont formées par les deux faces latérales 223 en regard de deux structures saillantes 22 juxtaposées.

Ces deux faces latérales 231 s'étendent ici parallèlement, ou au moins approximativement parallèlement, l'une par rapport à l'autre.

Les parties exposées de la face supérieure 212 de l'embase 21, entre deux structures saillantes 22, forment les faces de fond 232 des rainures 23.

Chaque rainure 23 est en plus terminée par deux extrémités ouvertes 234 (visibles schématiquement sur la figure 3), autorisant un écoulement et une évacuation des déjections.

En outre, ces rainures 23 ont avantageusement des dimensions particulières pour permettre une collecte efficace des déjections.

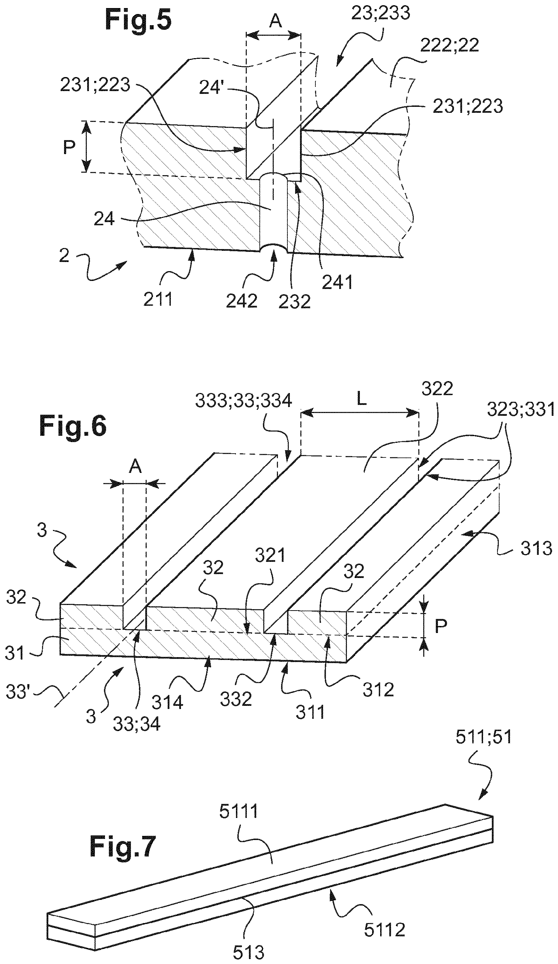

A cet égard, comme illustré sur la figure 5, chaque rainure 23 peut être définie par deux dimensions :
- une largeur A, correspondant à la distance séparant ses deux faces latérales 231 en regard, et
- une profondeur P, correspondant à la distance maximale séparant, d'une part, sa face de fond 232 et, d'autre part, la face supérieure 222 du tapis 2.

En l'espèce, les rainures 23 ont avantageusement chacune :
- une largeur A d'au maximum 50 mm, de préférence comprise entre 15 et 50 mm, et
- une profondeur P d'au minimum de 15 mm, avantageusement comprise entre 15 et 50 mm.

Les rainures 23 sont avantageusement régulièrement espacées, les unes par rapport aux autres, sur la largeur du tapis 2. En d'autres termes, ces rainures 23 sont avantageusement régulièrement réparties sur le revêtement de sol 1.

De préférence, tel qu'illustré sur la figure 3, les rainures 23 sont rectilignes et s'étendent parallèlement les unes par rapport aux autres.

Chaque rainure 23 comporte ainsi un axe longitudinal 23', s'étendant parallèlement à ses faces latérales 231 ; les axes longitudinaux 23' des différentes rainures 23 s'étendent parallèlement les uns aux autres et parallèlement aux bordures latérales 213 du tapis 2 (figure 3).

Et ces rainures 23 s'étendent sur toute la longueur de ce tapis 2 (entre les bordures d'extrémité 214 de son embase 21).

L'embase 21 comporte encore des orifices traversants 24, adaptés à l'écoulement des déjections depuis les rainures 23 et en direction de la structure support 3 sous-jacente.

Chaque orifice traversant 24 comporte pour cela deux extrémités (figure 5) :
- une extrémité supérieure 241, débouchant dans l'une des rainures 23, et
- une extrémité inférieure 242, débouchant au travers de la face inférieure 211 dudit tapis 2.

Les orifices traversants 24 sont répartis le long de chacune des rainures 23.

Chaque orifice traversant 24 comporte avantageusement un axe longitudinal 24' orienté verticalement.

Pour une collecte optimale des déjections, chaque orifice traversant 24 a une forme allongée, par exemple oblongue.

Chaque orifice traversant 24 s'étend avantageusement sur toute la largeur (ou au moins approximativement toute la largeur) de la rainure 23 sus-jacente.

Par exemple, la largeur et la longueur de chaque orifice traversant 24 sont comprises entre 5 mm et 120 mm, avantageusement entre 5 mm et 30 mm.

Par ailleurs, les faces supérieures 222 des structures saillantes 22 sont avantageusement adaptées à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur entre les faces inférieure 211 et supérieure 222 du tapis 2, par rapprochement des faces respectives.

Pour cela, la tapis 2 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce tapis 2 peut être réalisé :
- mono-matériau, ou
- multi-matériaux, par exemple un premier matériau formant l'embase 21 et un second matériau formant les structures saillantes 22.

De manière à optimiser encore ce phénomène de déformation élastique, chaque structure saillante 22 peut intégrer une chambre longitudinale étanche destinée à contenir un fluide.

Les faces supérieures 222 des structures saillantes 22 ont avantageusement une forme légèrement bombée convexe.

Cette caractéristique structurelle favorise alors le déplacement des déjections en direction des rainures 23 situées de part et d'autre.

De son côté, l'embase 21 a par exemple une épaisseur comprise entre 2 et 10 mm, une largeur qui est avantageusement comprise entre 300 et 3000 mm, et une longueur d'au moins 3 m de long.

Dans le sens de son épaisseur, l'embase 21 comporte ici deux couches, l'une supérieure 215 et l'autre inférieure 216, entre lesquelles est rapportée une couche intercalaire de renfort 217 (figure 4).

La couche intercalaire de renfort 217 est choisie parmi les fibres textiles, de métal ou de tout autre produit apportant la stabilité et/ou la résistance à l'élongation.

Cette couche intercalaire de renfort 217 consiste par exemple en une armature textile servant de renfort, réalisée avantageusement en matériau choisi parmi le nylon, le coton, le polyester, le polyamide ou tout autre textile de renfort.

Un tel tapis 2, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures 23 pour la récupération efficace des déjections aux extrémités de ces rainures 23.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

L'embase 21 a une largeur qui est avantageusement comprise entre 300 et 3000 mm, et plus généralement une largeur égale au couloir de circulation équipé.

Un tel tapis 2 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

### Structure support

La structure support 3 présente avantageusement une structure identique, ou au moins similaire, au tapis 2.

Ainsi, tel que représenté sur la figure 6, la structure support 3 consiste avantageusement en une bande allongée comportant une embase 31 dont :
- une face inférieure 311 est destinée à reposer sur le sol,
- une face supérieure 312 est munie de structures saillantes 32 ménagées à distance les unes des autres, et
- le contour périphérique est délimité par deux bordures latérales 313 et par deux bordures d'extrémité 314.

La face inférieure 311 de l'embase 31 forme la face inférieure de la structure support 3 (dans un souci de simplification, la face inférieure de la structure support 3 est également désignée par le repère 311).

Les structures saillantes 32 ont chacune une forme allongée, du type longeron ou chevron, régulièrement réparties sur la largeur de l'embase 31 et s'étendant parallèlement à ses bordures latérales 313 (figures 1 et 2).

Ces structures saillantes 32 comportent chacune :
- une face inférieure 321 qui est solidarisée avec la face supérieure 312 de l'embase 31,
- une face supérieure libre 322 formant une partie de la face supérieure de la structure support 3, et
- deux faces latérales 323 formant les faces latérales d'une rainure 33.

Les faces supérieures 322 des structures saillantes 32 forment ensemble la face supérieure de la structure support 3, adaptée à recevoir le tapis 2 (dans un souci de simplification, la face supérieure de la structure support 3 est également désignée par le repère 322).

Chaque structure saillante 32 a avantageusement une hauteur P comprise entre 15 et 50 mm et une largeur L comprise entre 50 et 500 mm.

Deux structures saillantes 32 juxtaposées délimitent, entre elles, l'une des rainures 33 de la structure support 3.

Ces rainures 33 constituent là encore des structures de genre rigoles ou gouttières, ménagées et débouchant au niveau de la face supérieure 322 de la structure support 3.

Ces rainures 33 sont aptes à collecter (par gravité) les déjections s'écoulant depuis les rainures 23 du tapis 2, via leurs orifices traversants 24.

Pour cela, chaque rainure 33 est délimitée par deux faces latérales 331 qui sont raccordées par une face de fond 332 et qui délimitent une ouverture longitudinale 333 s'ouvrant vers le haut, au niveau de la face supérieure 322 de la structure support 3.

Les faces latérales 331 des rainures 33 sont formées par les deux faces latérales 323 en regard de deux structures saillantes 32 juxtaposées.

Ces deux faces latérales 331 s'étendent ici parallèlement, ou au moins approximativement parallèlement, l'une par rapport à l'autre.

Les parties exposées de la face supérieure 312 de l'embase 31, entre deux structures saillantes 32, forment les faces de fond 332 des rainures 33.

Ces faces de fond 332 sont avantageusement continues, c'est-à-dire dépourvues d'orifices traversants.

Chaque rainure 33 est en plus terminée par deux extrémités ouvertes 334, autorisant un écoulement et une évacuation des déjections.

En outre, ces rainures 33 ont avantageusement des dimensions particulières pour permettre une collecte efficace des déjections.

A cet égard, comme illustré sur la figure 6, chaque rainure 33 peut être définie par deux dimensions :
- une largeur A, correspondant à la distance séparant ses deux faces latérales 331 en regard, et
- une profondeur P, correspondant à la distance maximale séparant, d'une part, sa face de fond 332 et, d'autre part, la face supérieure 322 de la structure support 3.

En l'espèce, les rainures 33 ont avantageusement chacune des dimensions identiques à celles des rainures 23 du tapis 2 :
- une largeur A d'au maximum 50 mm, de préférence comprise entre 15 et 50 mm, et
- une profondeur P d'au minimum de 15 mm, avantageusement comprise entre 15 et 50 mm.

Les rainures 33 peuvent également être (avantageusement légèrement) plus larges que les rainures 23 du tapis 2.

Les rainures 33 sont avantageusement régulièrement espacées, les unes par rapport aux autres, sur la structure support 3. En d'autres termes, ces rainures 33 sont avantageusement régulièrement réparties sur le revêtement de sol 1.

De préférence, tel qu'illustré sur la figure 6, les rainures 33 sont rectilignes et s'étendent parallèlement les unes par rapport aux autres.

Chaque rainure 33 comporte ainsi un axe longitudinal 33', s'étendant parallèlement à ses faces latérales 331 ; les axes longitudinaux 33' des différentes rainures 33 s'étendent parallèlement les uns aux autres et parallèlement aux bordures latérales 313 de la structure support 3.

Les rainures 33 sont réparties sur la largeur de la structure support 3 ; et ces rainures 33 s'étendent sur toute la longueur de cette structure support 3 (entre les bordures d'extrémité 314 de son embase 31).

La structure support 3 est avantageusement réalisée dans au moins un matériau plastique choisi parmi le polyéthylène (PE), le polyéthylène haute densité (PEHD), le polychlorure de vinyle (PVC) ou le polypropylène (PP). Cette structure support 3 peut également être réalisée en béton.

Cette structure support 3 peut être réalisée :
- mono-matériau, ou
- multi-matériaux, par exemple un premier matériau formant l'embase 31 et un second matériau formant les structures saillantes 32.

De son côté, l'embase 31 a par exemple une épaisseur comprise entre 2 et 20 mm, une largeur qui est avantageusement comprise entre 300 et 3000 mm, et une longueur comprise entre 300 et 3000 mm.

Là encore, une telle structure support 3, avant sa pose, est avantageusement stockée sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures 33 pour la récupération efficace des déjections aux extrémités de ces rainures 33.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

L'embase 31 a une largeur qui est avantageusement comprise entre 300 et 3000 mm, et plus généralement une largeur égale au couloir de circulation équipé.

Encore selon un mode de réalisation particulier, chaque rainure 33 est avantageusement délimitée par un profilé de guidage 34 à section en U qui forme les deux faces latérales 331 et la face de fond 332.

Ces profilés de guidage 34 sont rapportés et intégrés dans la structure support 3.

Les profilés de guidage 34 vont permettre notamment :
- une réduction des efforts et des frottements liés au déplacement des moyens de convoyage ;
- une conduction optimale des déjections dans les conduits, jusqu'aux moyens de collecte.

### Assemblage du tapis avec la structure support

Le tapis 2 est disposé sur la structure support 3 de sorte que la face inférieure 211 de ce tapis 2 vienne reposer sur la face supérieure 322 de cette structure support 3.

L'ouverture longitudinale 333 de chacune des rainures 33 de la structure support 3 est ainsi obturée par une bande de la face inférieure 211 du tapis 2 rapporté.

Le tapis 2 est encore ajusté latéralement de sorte que l'une des rainures 23 du tapis 2 (voire chaque rainure 23 du tapis 2) est directement sus-jacente de l'une des rainures 33 de la structure support 3.

L'extrémité inférieure 242 des orifices traversants 24 d'une rainure 23 du tapis 2 débouche ainsi en regard de l'ouverture longitudinale 333 de la rainure 33 sous-jacente de la structure support 3.

### Moyens de collecte

Les moyens de collecte 4 comprennent en particulier une fosse 41 (ou un canal de reprise), installée au niveau des deux extrémités ouvertes 234, 334 des rainures 23, 33 du revêtement de sol 1 (figure 3).

Une pente est avantageusement appliquée au revêtement de sol 1 (et en particulier à ses rainures 23, 33), pour favoriser l'écoulement des fluides collectés en direction des moyens de collecte 4.

### Moyens pour convoyer les déjections

De manière à générer une circulation optimale des déjections en direction de ces moyens de collecte 4, et éventuellement des déjections solides, le système de collecte selon l'invention comprend encore les moyens 5 pour convoyer les liquides (et éventuellement des déjections solides) le long des rainures 23, 33 du revêtement de sol 1.

Les moyens de convoyage 5 sont encore désignés « moyens de poussée ».

En l'espèce, ces moyens de convoyage 5 comprennent pour cela des organes d'entrainement 51 qui sont rapportés dans les rainures 23, 33 et qui sont accouplés avec des moyens de manœuvre 52 pour leur appliquer un mouvement destiné à provoquer le déplacement des déjections dans un sens adapté au sein de ces rainures 23, 33.

L'organe d'entraînement allongé 51, tel que représenté sur la figure 7, consiste avantageusement en une bande sans fin réalisée dans au moins un matériau élastomère.

Par « matériau élastomère », on entend en particulier le caoutchouc naturel, le caoutchouc « naturel synthétique » (ou poly-isoprène synthétique), le polybutadiène ou le styrène - butadiène.

Pour assurer un convoyage optimal, cet organe d'entraînement allongé 51 comporte en particulier un corps 511, d'une part, sur la longueur duquel peut être répartie une pluralité de surfaces de convoyage (formées par exemple par des plots monoblocs ou par des reliefs transversaux - non représentés) et, d'autre part, dans lequel sont rapportés des moyens de renfort longitudinal 513.

Les surfaces de convoyage sont adaptées à convoyer les déjections présentes au sein des rainures 23, 33 associées.

Les moyens de renfort longitudinal 513 sont adaptés pour limiter les possibilités d'allongement longitudinal de l'organe d'entraînement allongé 51, et en particulier de son corps 511.

Ces moyens de renfort longitudinal 513 se présentent ici sous la forme d'une âme de renfort intégrée / noyée dans l'épaisseur de l'organe d'entraînement allongé 51, et en l'occurrence de son corps 511.

Par exemple, cette âme de renfort 513 consiste en une trame textile s'étendant parallèlement, ou au moins approximativement parallèlement, aux surfaces opposées 5111, 5112 du corps 511 qui forment des surfaces de convoyage des déjections.

Cette âme de renfort 513 est ici agencée au niveau de la fibre neutre du corps 511. L'âme de renfort 513 s'étend alors avantageusement à égale distance des deux surfaces opposées 5111, 5112 du corps 511.

En l'espèce, les organes d'entrainement 51 comportent des brins actifs 515, 516 qui s'étendent chacun au sein de l'une des rainures 23, 33 (figure 1).

Ces brins actifs 515, 516 sont raccordés par des brins de jonction 517 s'étendant entre deux des brins actifs 515, 516 successifs.

Les moyens de manœuvre 52 assurent une manœuvre en translation des organes d'entraînement 51 au sein de leurs rainures 23, 33 respectives, de sorte à générer une circulation des déjections au sein des rainures 23, 33 associées.

Les moyens de manœuvre 52 comprennent avantageusement un ensemble de poulies 521 coopérant chacune avec l'un des brins de jonction 517 pour leur guidage entre deux rainures 23, 33.

Par exemple, les poulies 521 sont agencées de sorte que les organes d'entrainement 51 forment un aller-retour au sein de deux rainures 23, 33 superposées.

Selon l'invention, l'organe d'entrainement 51 comporte deux brins actifs 515, 516 superposés dans les rainures 23, 33 superposées :
- un brin supérieur 515, cheminant dans la rainure 23 du tapis 2 pour former une partie supérieure apte à servir de support aux déjections solides tout en autorisant l'écoulement des déjections liquides, et
- un brin inférieur 516, cheminant dans la rainure 33 de la structure support 3, pour former une partie inférieure apte à convoyer les déjections liquides s'écoulant depuis ledit brin supérieur 515.

Le brin supérieur 515 et le brin inférieur 516 sont ainsi destinés à cheminer dans deux rainures 23, 33 superposées, dans des sens inverses l'un par rapport à l'autre.

Pour une séparation optimale, la bande sans fin 51 comporte une largeur supérieure à la largeur des ouvertures traversantes 24 des rainures 23 du tapis 2.

De plus, les deux faces opposées 5111, 5112 des organes d'entrainement 51 sont avantageusement agencées horizontalement.

Une telle forme de réalisation vise à favoriser une évacuation, d'une part, des déjections solides au niveau d'une première extrémité 234 de la rainure 23 du tapis 2 et, d'autre part, des déjections liquides au niveau d'une seconde extrémité 334 de la rainure 33 de la structure support 3 (à l'opposé du revêtement de sol 1).

L'une au moins des poulies 521 est motorisée pour assurer le cheminement des organes d'entrainement 51.

La vitesse de cheminement est par exemple comprise entre 1 et 10 m/min, notamment suivant la concentration en animaux au m² et le type de déjection.

### Moyens d'alimentation en liquide de traitement

De manière générale, pour une hygiène efficace et une évacuation optimale des déjections, le système de collecte comporte encore avantageusement des moyens pour une alimentation des rainures 23, 33 avec un liquide de traitement (non représentés).

Ces moyens d'alimentation consistent avantageusement en des moyens permettant un écoulement du liquide de traitement directement dans les rainures 23, 33, par exemple un dispositif du type goutte à goutte.

Ces moyens d'alimentation sont alors avantageusement implantés d'un côté amont des rainures 23, 33 (à proximité de l'une au moins de ses extrémités ouvertes 234, 334), tenant compte du sens de cheminement des déjections.

Le liquide de traitement contient par exemple des bactéries d'intérêt et/ou un agent de désinfection.

### Mise en œuvre

Dans le cas d'un couloir de circulation C comportant un axe longitudinal C' et recouvert par le revêtement de sol 1, les rainures 23, 33 de ce revêtement de sol 1 sont avantageusement agencées parallèlement, ou au moins approximativement parallèlement, par rapport audit axe longitudinal C'.

En fonctionnement, le revêtement de sol 1 est susceptible de recevoir différentes matières organiques, notamment des déjections (urine, fèces).

La surface supérieure 222 du revêtement de sol 1 peut être recouverte de paille.

Le revêtement de sol 1 permet alors un écoulement des déjections dans les rainures 23 du tapis 2, évitant ainsi l'accumulation de ces liquides sur le tapis 2 qui reste ainsi relativement sec.

Lors d'un nettoyage de ce revêtement de sol 1, le liquide de nettoyage va également s'écouler dans ces rainures 23, 33, évitant que la face supérieure 222 du tapis 2 reste mouillée de manière excessive.

Ce phénomène permet par conséquent aux animaux de cheminer sur une surface relativement saine, avec un risque de chute réduit et sans humidification de leurs pieds.

L'ensemble des déjections s'écoulant dans les rainures 23, 33 est alors efficacement évacué vers les moyens de collecte 4 (notamment la fosse 41) par la mise en œuvre des moyens de convoyage 5 décrits ci-dessus en relation avec la figure 1.

Comme évoqué, les organes d'entrainement 51 sont mises en mouvement (en sens unique) de sorte à générer le cheminement des déjections vers les moyens de collecte 4 dédiés.

En l'espèce, l'organe d'entrainement 51 est entraîné dans les rainures 23, 33 superposées de sorte que :
- le brin supérieur 515 chemine dans la rainure 23 du tapis 2, dans un premier sens, pour former une partie supérieure apte à servir de support aux déjections solides tout en autorisant l'écoulement des déjections liquides, et
- le brin inférieur 516 chemine dans la rainure 33 sous-jacente de la structure support 3, dans un second sens inverse audit premier sens, pour former une partie inférieure apte à convoyer les déjections liquides s'écoulant depuis ledit brin supérieur 515 (via les orifices traversants 24).

Il est ainsi obtenu une évacuation, d'une part, des déjections solides au niveau d'une première extrémité 234 des rainures 23 du tapis 2 et, d'autre part, des déjections liquides au niveau d'une seconde extrémité 334 des rainures 33 de la structure support 3 (à l'opposé du revêtement de sol 1).

Les moyens de convoyage 5 permettent ainsi une circulation et une évacuation active des déjections contenues dans les rainures 23, 33, pour éviter leur stagnation et pour limiter le développement d'ammoniac et de microorganismes dans l'enceinte d'élevage.

Pour un nettoyage optimal de ces rainures 23, 33, le liquide de traitement peut être déversé par l'intermédiaire des moyens d'alimentation précités.

De manière générale, le revêtement de sol 1 selon l'invention permet ainsi une évacuation rapide et en continu des déjections par rapport à la face supérieure 222 du tapis 2 et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les rainures 33 de la surface support 3, par rapport aux fèces et à la paille qui restent principalement sur la face supérieure 222 du tapis 2 ou dans ses rainures 23, de sorte à éviter leur mélange et à limiter la production d'ammoniac au sein de l'enceinte d'élevage.

## Revendications

1. Système pour la collecte des déjections s'écoulant sur le sol d'une enceinte pour l'élevage d'animaux, par exemple de bovins, lequel système de collecte comprend :
(i) un revêtement de sol (1) comprenant un tapis (2) rapporté sur une structure support (3),
lequel tapis (2) comporte :
- une face supérieure (222), adaptée à l'appui des animaux,
- une face inférieure (211), reposant sur ladite structure support (3),
- des rainures (23), adaptées à collecter les déjections, ménagées au niveau de ladite face supérieure (222) et munies chacune d'une ouverture longitudinale (233) débouchant au niveau de ladite face supérieure (222),
- des orifices traversants (24), adaptés à l'écoulement des déjections en direction de ladite structure support (3), qui présentent chacun une extrémité supérieure (241) débouchant dans l'une desdites rainures (23) et une extrémité inférieure (242) débouchant au travers de la face inférieure (211) dudit tapis (2),
laquelle structure support (3) comporte :
- une face supérieure (322), adaptée à recevoir ledit tapis (2), et
- des rainures (33), adaptées à recevoir les déjections, ménagées au niveau de la face supérieure (322) de ladite structure support (3) et munies chacune d'une ouverture longitudinale (334) qui débouche au niveau de la face supérieure (322) de ladite structure support (3),
laquelle extrémité inférieure (242) des orifices traversants (24) du tapis (2) débouche en regard de l'ouverture longitudinale (334) d'une rainure (33) de ladite structure support (3),
(ii) des moyens (4) pour collecter les déjections circulant au sein desdites rainures (23, 33), et
(iii) des moyens (5) pour convoyer les déjections au sein desdites rainures (23) du tapis (2) et desdites rainures (33) de la structure support (3), de manière à générer ladite circulation desdites déjections en direction desdits moyens de collecte (4), lesquels moyens de convoyage (5) comprennent des organes d'entrainement (51) qui sont rapportés dans les rainures (23, 33) et des moyens de manœuvre (52) qui sont accouplés avec les organes d'entraînement (51) pour leur appliquer un mouvement destiné à provoquer le déplacement des déjections dans un sens adapté au sein de ces rainures (23, 33), lesquels organes d'entrainement (51) comportent deux brins actifs (515, 516) superposés dans les rainures (23, 33) superposées :
- un brin supérieur (515), cheminant dans la rainure (23) du tapis (2) pour former une partie supérieure apte à servir de support aux déjections solides tout en autorisant l'écoulement des déjections liquides, et
- un brin inférieur (516), cheminant dans la rainure (33) de la structure support (3), pour former une partie inférieure apte à convoyer les déjections liquides s'écoulant depuis ledit brin supérieur (515),
lequel brin supérieur (515) et lequel brin inférieur (516) sont ainsi destinés à cheminer dans deux rainures (23, 33) superposées, dans des sens inverses l'un par rapport à l'autre.

2. Système selon la revendication 1, **caractérisé en ce que** l'une au moins des rainures (23) du tapis (2) est sus-jacente de l'une des rainures (33) de la structure support (3),
et **en ce que** les orifices traversants (24) raccordés à ladite rainure (23) du tapis (2) comporte un axe longitudinal (24') orienté verticalement.

3. Système selon l'une quelconque des revendications 1 ou 2, **caractérisé en ce que** la structure support (3) comporte deux faces opposées :
- ladite face supérieure (322), au niveau de laquelle sont ménagées les rainures (33) de ladite structure support (3), et
- une face inférieure (311) reposant sur une surface de réception.

4. Système selon l'une quelconque des revendications 1 à 3, **caractérisé en ce que** le tapis (2) est réalisé dans un matériau choisi parmi les matériaux élastomères ou les matériaux plastiques élastomères, et
**en ce que** la structure support (3) est réalisée dans un matériau choisi parmi les plastiques.

5. Système selon l'une quelconque des revendications 1 à 4, **caractérisé en ce que** les orifices traversants (24) du tapis (2) ont une forme allongée, avec une largeur et une longueur comprises entre 5 mm et 120 mm.

6. Système selon l'une quelconque des revendications 1 à 5, **caractérisé en ce que** les rainures (23) du tapis (2) et les rainures (33) de la structure support (3) sont rectilignes et s'étendent parallèlement les unes par rapport aux autres.

7. Système selon l'une quelconque des revendications 1 à 6, **caractérisé en ce que** les rainures (23) du tapis (2) et les rainures (33) de la structure support (3) ont chacune :
- une largeur comprise entre 15 et 50 mm et
- une hauteur comprise entre 15 et 50 mm, et
**en ce que** les rainures (23, 33) sont espacées d'une largeur comprise entre 50 et 500 mm.

8. Système selon l'une quelconque des revendications 1 à 7, **caractérisé en ce que** :
- les organes d'entrainement (51) comportent chacun au moins une surface de convoyage (5111, 5112) qui est apte à convoyer les déjections présentes au sein de la rainure (23, 33) associée, et ladite au moins une surface de convoyage (5111, 5112) génère ladite circulation de déjections au sein de sa rainure (23, 33).

9. Système selon l'une quelconque des revendications 1 à 8, **caractérisé en ce qu'**il comporte encore des moyens pour alimenter les rainures (23, 33) avec un liquide de traitement.

10. Système selon l'une quelconque des revendications 1 à 9, **caractérisé en ce que** chaque rainure (23, 33) est délimitée par deux faces latérales (231, 331) qui sont raccordées par une face de fond (232, 332) et qui délimitent une ouverture longitudinale (233, 333) s'ouvrant vers le haut, au niveau de la face supérieure (222, 322) correspondante.

11. Enceinte d'élevage équipée d'un système de collecte (1, 4, 5) selon l'une quelconque des revendications 1 à 10.

12. Enceinte d'élevage selon la revendication 11, **caractérisée en ce qu'**elle comporte un couloir de circulation (C) comportant un axe longitudinal (C') et recouvert par un revêtement de sol (1), et **en ce que** les rainures (23, 33) dudit revêtement de sol (1) sont agencées parallèlement, ou au moins approximativement parallèlement, par rapport audit axe longitudinal (C').

## Patentansprüche

1. System zum Sammeln von Ausscheidungen, die auf dem Boden eines umschlossenen Raums zur Aufzucht von Tieren, beispielsweise Rindern, abfließen, wobei das System folgendes aufweist:
(i) einen Bodenbelag (1) mit einem auf eine Trägerstruktur (3) aufgelegten Teppich (2). wobei der Teppich (2)
- eine für den Druck durch die Tiere ausgelegte Oberseite (222),
- eine auf der Trägerstruktur (3) aufliegende Unterseite (211),
- Rinnen (23), die dazu ausgelegt sind, die Ausscheidungen zu sammeln, auf der Ebene der Oberseite (222) eingerichtet sind und jeweils mit einer auf der Ebene der Oberseite (222) mündenden Längsöffnung (233) versehen sind,
- Durchgangslöcher (24), die für das Abfließen der Ausscheidungen zur Trägerstruktur (3) hin ausgelegt sind und die jeweils ein in eine der Rinnen (23) mündendes oberes Ende (241) und ein durch die Unterseite (211) des Teppichs (2) mündendes unteres Ende (242) aufweisen,
aufweist,
wobei die Trägerstruktur (3)
- eine Oberseite (322), die dazu ausgelegt ist, den Teppich (2) aufzunehmen, und
- Rinnen (33), die dazu ausgelegt sind, die Ausscheidungen aufzunehmen, auf der Ebene der Oberseite (322) der Trägerstruktur (3) eingerichtet sind und jeweils mit einer Längsöffnung (334) versehen sind, die auf der Ebene der Oberseite (322) der Trägerstruktur (3) mündet,
aufweist,
wobei das untere Ende (242) der Durchgangslöcher (24) des Teppichs (2) gegenüber der Längsöffnung (334) einer Rinne (33) der Trägerstruktur (3) mündet,
(ii) Mittel (4) zum Sammeln der in den Rinnen (23, 33) fließenden Ausscheidungen und
(iii) Mittel (5) zum Weiterleiten der Ausscheidungen in den Rinnen (23) des Teppichs (2) und den Rinnen (33) der Trägerstruktur (3), um das Abfließen der Ausscheidungen in Richtung der Mittel (4) zum Sammeln zu bewirken,
wobei die Mittel (5) zum Weiterleiten Antriebsorgane (51), die in die Rinnen (23, 33) eingefügt sind, und Betätigungsmittel (52), die mit den Antriebsorganen (51) verbunden sind, um bei ihnen eine Bewegung zu bewirken, die dazu bestimmt ist, die Fortbewegung der Ausscheidungen in einer geeigneten Richtung in den Rinnen (23, 33) zu bewirken, aufweisen,
wobei die Antriebsorgane (51) zwei in den übereinander liegenden Rinnen (23, 33) übereinander liegende aktive Trums (515, 516) aufweisen:
- einen oberen Trum (515), der in der Rinne (23) des Teppichs (2) verläuft, um einen oberen Teil zu bilden, der dazu geeignet ist, als Träger für feste Ausscheidungen zu dienen und gleichzeitig das Abfließen flüssiger Ausscheidungen zu ermöglichen, und
- einen unteren Trum (516), der in der Rinne (33) der Trägerstruktur (3) verläuft, um einen unteren Teil zu bilden, der dazu geeignet ist, die vom oberen Trum (515) herabfließenden flüssigen Ausscheidungen zu transportieren,
wobei der obere Trum (515) und der untere Trum (516) dabei dazu bestimmt sind, sich in zwei übereinander liegenden Rinnen (23. 33) in zueinander entgegengesetzten Richtungen zu bewegen.

2. System gemäß Anspruch 1, **dadurch gekennzeichnet, daß** mindestens eine der Rinnen (23) des Teppichs (2) über einer der Rinnen (33) der Trägerstruktur (3) liegt und daß die mit der Rinne (23) des Teppichs (2) verbundenen Durchgangslöcher (24) eine senkrecht orientierte Längsachse (24') aufweisen.

3. System gemäß Anspruch 1 oder 2, **dadurch gekennzeichnet, daß** die Trägerstruktur (3) zwei entgegengesetzte Seiten aufweist:
- die Oberseite (322), auf deren Ebene die Rinnen (33) der Trägerstruktur (3) ausgebildet sind, und
- eine Unterseite (311), die auf einer Aufnahmefläche ruht.

4. System gemäß einem der Ansprüche 1 bis 3. **dadurch gekennzeichnet, daß** der Teppich (2) aus einem Material gefertigt ist, das aus den elastomeren Materialien oder den elastomeren Plastikmaterialien ausgewählt ist, und
daß die Trägerstruktur (3) aus einem aus den Plastikmaterialien ausgewählten Material gefertigt ist.

5. System gemäß einem der Ansprüche 1 bis 4, **dadurch gekennzeichnet, daß** die Durchgangslöcher (24) des Teppichs (2) eine längliche Form mit einer Breite und einer Länge zwischen 5 mm und 120 mm haben.

6. System gemäß einem der Ansprüche 1 bis 5, **dadurch gekennzeichnet, daß** die Rinnen (23) des Teppichs (2) und die Rinnen (33) der Trägerstruktur (3) geradlinig sind und sich parallel zueinander erstrecken.

7. System gemäß einem der Ansprüche 1 bis 6, **dadurch gekennzeichnet, daß** die Rinnen (23) des Teppichs (2) und die Rinnen (33) der Trägerstruktur (3) jeweils
- eine Breite zwischen 15 und 50 mm und
- eine Höhe zwischen 15 und 50 mm aufweisen und
daß die Rinnen (23, 33) um eine Breite zwischen 50 und 500 mm voneinander beabstandet sind.

8. System gemäß einem der Ansprüche 1 bis 7, **dadurch gekennzeichnet, daß**
- die Antriebsorgane (51) jeweils mindestens eine Transportfläche (5111, 5112) aufweisen, die geeignet ist, die in der zugehörigen Rinne (23, 33) befindlichen Ausscheidungen zu transportieren, und
- die mindestens eine Transportfläche (5111, 5112) das Abfließen von Ausscheidungen in ihrer Rinne (23, 33) bewirkt.

9. System gemäß einem der Ansprüche 1 bis 8, **dadurch gekennzeichnet, daß** es außerdem Mittel zum Versorgen der Rinnen (23, 33) mit einer Behandlungsflüssigkeit aufweist.

10. System gemäß einem der Ansprüche 1 bis 9. **dadurch gekennzeichnet, daß** jede Rinne (23, 33) von zwei seitlichen Flächen (231, 331) begrenzt ist, die durch eine Bodenfläche (232, 332) verbunden sind und die auf der Ebene der zugehörigen Oberseite (222. 322) eine sich nach oben öffnende Längsöffnung (233, 333) begrenzen.

11. Umschlossener Raum für eine Aufzucht, der mit einem System zum Sammeln (1, 4, 5) gemäß einem der Ansprüche 1 bis 10 ausgestattet ist.

12. Umschlossener Raum für eine Aufzucht gemäß Anspruch 11, **dadurch gekennzeichnet, daß** er einen Bewegungskorridor (C) mit einer Längsachse (C') aufweist, der mit einem Bodenbelag (1) abgedeckt ist, und daß die Rinnen (23, 33) des Bodenbelags (1) parallel oder mindestens ungefähr parallel zur Längsachse (C') angeordnet sind.

## Claims

1. A system for collecting the excreta flowing on the ground of an enclosure for livestock, for example cattle, said collection system comprising:
(i) a flooring (1) comprising a carpet (2) placed on a support structure (3),
said carpet (2) including:
- an upper face (222), suitable for animals to rest on,
- a lower face (211), bearing on said support structure (3),
- grooves (23), adapted to collect excreta, arranged at said upper face (222) and each provided with a longitudinal aperture (233) opening out at said upper face (222),
- through-holes (24), suitable for the flowing of the excreta towards said support structure (3), that each have an upper end (241) opening out into one of said grooves (23) and a lower end (242) opening out through the lower face (211) of said carpet (2),
said support structure (3) including:
- an upper face (322), adapted to receive said carpet (2), and
- grooves (33), adapted to receive the excreta, arranged at the upper face (322) of said support structure (3) each provided with a longitudinal aperture (334) opening out at the upper face (322) of said support structure (3),
said lower end (242) of the through-holes (24) of the carpet (2) opening out opposite the longitudinal aperture (334) of a groove (33) of said support structure (3),
(ii) means (4) for collecting the excreta circulating within said grooves (23, 33), and
(iii) means (5) for conveying the excreta within said grooves (23) of the carpet (2) and said grooves (33) of the support structure (3), in such a way as to generate said circulation of said excreta towards said collection means (4),
said conveyor means (5) comprising driving members (51) that are added in the grooves (23, 33) and operating means (52) that are coupled with the driving members (51) to apply to them a movement intended to cause the excreta to move in a suitable direction within these grooves (23, 33),
said driving members (51) including two superimposed active strands (515, 516) in the superimposed grooves (23, 33):
- an upper strand (515), travelling in the groove (23) of the carpet (2) to form an upper part adapted to serve as a support to the solid excreta while allowing the flowing of the liquid excreta, and
- a lower stand (516), travelling in the groove (33) of the support structure (3), to form a lower part adapted to convey the liquid excreta flowing from said upper strand (515),
said upper strand (515) and said lower strand (516) being thus intended to travel in two superimposed grooves (23, 33), in reverse directions with respect to each other.

2. The system according to claim 1, **characterized in that** one at least of the grooves (23) of the carpet (2) is underlying one of the grooves (33) of the support structure (3),
and **in that** the through-holes (24) connected to said groove (23) of the carpet (2) have a longitudinal axis (24') directed vertically.

3. The system according to any one of claims 1 or 2, **characterized in that** the support structure (3) has two opposite faces:
- said upper face (322), at which are arranged the grooves (33) of said support structure (3), and
- a lower face (311) bearing on a receiving surface.

4. The system according to any one of claims 1 to 3, **characterized in that** the carpet (2) is made of a material chosen among the elastomeric materials or the elastomeric plastic materials, and
**in that** the support structure (3) is made of a material chosen among plastics.

5. The system according to any one of claims 1 to 4, **characterized in that** the through-holes (24) of the carpet (2) have an elongated shape, with a width and a length between 5 mm and 120 mm.

6. The system according to any one of claims 1 to 5, **characterized in that** the grooves (23) of the carpet (2) and the grooves (33) of the support structure (3) are rectilinear and extend parallel to each other.

7. The system according to any one of claims 1 to 6, **characterized in that** the grooves (23) of the carpet (2) and the grooves (33) of the support structure (3) each have:
- a width between 15 and 50 mm, and
- a height between 15 and 50 mm, and
and **in that** the grooves (23, 33) are spaced apart by a width between 50 and 500 mm.

8. The system according to any one of claims 1 to 7, **characterized in that**:
- the driving members (51) each have at least one conveying surface (5111, 5112) that is capable of conveying the excreta present within the associated groove (23, 33), and
- said at least one conveying surface (5111, 5112) generates said circulation of excreta within its groove (23, 33).

9. The system according to any one of claims 1 to 8, **characterized in that** it also includes means for supplying the grooves (23, 33) with a treatment liquid.

10. The system according to any one of claims 1 to 9, **characterized in that** each groove (23, 33) is delimited by two lateral faces (231, 331) that are connected by a bottom face (232, 332) and that delimit a longitudinal aperture (233, 333) opening upward, at the corresponding upper face (222, 322).

11. A livestock enclosure equipped with a collection system (1, 5) according to any one of claims 1 to 10.

12. The livestock enclosure according to claim 11, **characterized in that** it comprises a circulation corridor (C) having a longitudinal axis (C') and covered with a flooring (1), and **in that** the grooves (23, 33) of said flooring (1) are arranged parallel, or at least approximately parallel, with respect to said longitudinal axis (C').
